Europäisches Patentamt

European Patent Office

Office européen des brevets

(19)

(11) Veröffentlichungsnummer: **0 340 508 B1**

(12) # EUROPÄISCHE PATENTSCHRIFT

(45) Veröffentlichungstag der Patentschrift:
04.12.91 Patentblatt 91/49

(51) Int. Cl.$^5$: **B01J 25/00**, B01J 31/02,
C07C 209/00

(21) Anmeldenummer: 89106686.2

(22) Anmeldetag: 14.04.89

(54) Feste wasserfreie Raney-Katalysator-Dispersion.

(30) Priorität: 04.05.88 DE 3815110

(43) Veröffentlichungstag der Anmeldung:
08.11.89 Patentblatt 89/45

(45) Bekanntmachung des Hinweises auf die
Patenterteilung:
04.12.91 Patentblatt 91/49

(84) Benannte Vertragsstaaten:
BE DE ES FR GB IT NL SE

(56) Entgegenhaltungen:
EP-A- 0 124 010
DE-A- 2 209 004
DE-A- 2 724 239
US-A- 3 972 940

(73) Patentinhaber: **Degussa Aktiengesellschaft**
**Weissfrauenstrasse 9**
**W-6000 Frankfurt am Main 1 (DE)**

(72) Erfinder: **Lippert, Gerhard**
**Bahnhofstrasse 30**
**W-8752 Kleinostheim (DE)**
Erfinder: **Hartung, Rolf**
**Hainstrasse 19**
**W-6451 Neuberg (DE)**

## Beschreibung

Die Erfindung betrifft eine feste, weniger als 1 Gew.%Wasser enthaltende Raney-Katalysator-Dispersion in einem organischen Einbettungsmittel, welche nicht-pyrophor, lager- und transportstabil sowie bei der Anwendung zu Hydrierungen leicht portionier- bzw. dosierbar ist.

Letzteres ist insoweit erwünscht, als die üblicherweise verwendeten wassergeschützten Raney-Katalysatoren kaum exakt mengenmäßig portioniert bzw. dosiert werden können, da vor der Anwendung zunächst das über dem abgesetzten Nickel stehende Wasser dekantiert wird und der zurückbleibende Katalysatorschlamm ohne aufwendige Homogenisierung kaum in exakt bemessene Nickelportionen aufgeteilt werden kann.

Ein allgemeiner Nachteil von Raney-Katalysatoren besteht in ihrer Feuergefährlichkeit, sobald das üblicherweise zugesetzte Schutzmittel Wasser entfernt wird. Ein weiterer Nachteil ist darin zu sehen, daß der mit Wasser benetzte Katalysator in hydrophobe zu hydrierende Substrate nicht ohne weiteres eingebracht werden kann. Im übrigen besteht das erwähnte Portionier- bzw. Dosierproblem.

Gemäß DE-PS 2724239 wird dieser Mangel dadurch zu überwinden versucht, daß ein hydrierungsaktiver Raney-Katalysator in Form eines wäßrigen Schlamms mit einem primären, sekundären oder tertiären Amin mit $C_8$-$C_{22}$, einem Diamin, einem zyklischen Amin oder einem festen, ein oder mehrere dieser Aminverbindungen enthaltenden Amingemisch als Einbettungsmittel vermischt wird. Die Patentschrift gibt zwar an, daß die im Katalysator verbleibende Wassermenge sehr gering sein kann, doch wird dies offenbar nur auf Kosten von systemfremden Zusätzen, wie Bleicherde, erreicht. Ohne diese verbleibt stets ein Teil des ursprünglich eingebrachten Wassers in der als pastenförmig bezeichneten Mischung und kann bei der Verwendung des Produkts zur Hydrierung bestimmter Verbindungen stören. Somit sind genannter Patentschrift keine Verfahrensmaßnahmen zur Gewinnung eines Produkts zu entnehmen, welches kein freies oder adsorbiertes Wasser enthält.

Der Erfindung liegt daher die Aufgabe zugrunde, einen praktisch wasserfreien, d.h. weniger als 1 Gew.% Wasser enthaltenden Hydrierungskatalysator zu entwickeln, mit dem die aufgezeigten Schwierigkeiten behoben werden können. Der neue Katalysator kann sowohl in wasserempfindlichen als auch in wasserunempfindlichen Reaktionssystemen eingesetzt werden.

Gegenstand der Erfindung ist demgemäß eine feste, weniger als 1 Gew.% Wasser enthaltende Raney-Katalysator-Dispersion in einem organischen Einbettungsmittel, das gegebenenfalls aus einem primären, sekundären oder tertiären Amin mit $C_8$-$C_{22}$, einem Diamin oder zyklischen Amin oder einem festen, eine oder mehrere dieser Aminverbindungen enthaltenden Amingemisch besteht, erhältlich durch Vermischen eines Raney-Katalysators in Form eines wäßrigen Schlamms mit dem Einbettungsmittel.

Sie ist dadurch gekennzeichnet, daß der Katalysatorschlamm in einem Vakuummischer unter Inertgas vorgelegt, das schmelzbare organische Einbettungsmittel, gegebenenfalls aufgeschmolzen, unter Mischen hinzugegeben, 80 bis 90 Gew.-% des mit dem Katalysatorschlamm in den Vakuummischer eingebrachten Wassers aus dem inhomogenen Dreistoffsystem Katalysator/Wasser/Einbettungsmittel bei Temperaturen unterhalb des Schmelzpunkts des Einbettungsmittels im Vakuum und das Restwasser oberhalb des Schmelzpunkts des Einbettungsmittels, vorzugsweise unterhalb 100°C, im Vakuum unter Fortsetzen des Mischens abdestilliert wird und daß die Dispersion nach Brechen des Vakuums mit Inertgas, gegebenenfalls nach Verformen in oberflächenarme Formkörper, in Gebinde abgefüllt wird, wobei das Einbettungsmittel auch ein aliphatischer Alkohol mit $C_{16}$-$C_{22}$ oder ein diese Alkohole enthaltendes festes Gemisch verschiedener Fettalkohole, ein festes Triglycerid, ein Paraffinwachs, ein natürliches oder synthetisches Wachs, ein Siliconharz oder ein organisches Polymer sein kann und wobei das Gewichtsverhältnis zwischen Katalystor-Feststoff und Einbettungsmittel 20-80 Gew.-% zu 80-20 Gew.-% beträgt.

Die erfindungsgemäßen Dispersionen weisen üblicherweise Restwassergehalte um 0,3 Gew.%, bestimmt nach der Methode von Karl Fischer, auf.

Die erfindungsgemäße Raney-Katalysator-Dispersion kann 50-70, vorzugsweise 55-65 Gew.% Raney-Katalysator und 50-30, vorzugsdweise 45-35 Gew.% Einbettungsmittel enthalten. Als Raney-Katalysator kann Raneynickel, Raneykobalt, Raneykupfer, Raneyeisen oder ein mit unedlen oder edlen Metallen dotierter Nickel-, Kobalt-, Kupfer- oder Eisen-Raney-Katalysator vorliegen. Zur Dotierung können als unedle Metalle Molybdän, Chrom, Zirkon, Nickel, Eisen und Kupfer, als edle Metalle Silber, Platingruppenmetalle, insbesondere Palladium und Platin, verwendet werden

Die Einbettungsmittel sind schmelzbare organische Verbindungen, deren Konsistenz bei Raumtemperatur geeignet ist, die Teilchen des Raney-Katalysators allseitig einzuhüllen. Solche Mittel sind ein aliphatischer Alkohol mit $C_{16}$-$C_{22}$ oder ein diese Alkohole enthaltendes festes Gemisch verschiedener Fettalkohole, ein primäres, sekundäres oder tertiäres Amin mit $C_8$-$C_{22}$, ein Diamin oder zyklisches Amin oder ein festes, ein oder mehrere dieser Aminverbindungen enthaltendes Amingemisch, ein festes Triglycerid, ein Paraffinwachs, ein natürliches oder synthetisches Wachs, Unter den im Anspruch 1 als "fest" bezeichneten Einbettungsmitteln wird hier nicht etwa "hart" verstanden, sondern vielmehr, daß das Einbettungsmittel bei Raumtemperatur nicht fließfähig ist, also nicht die Konsistenz einer flüssigen Paste besitzt. Es kann jedoch bei Anwendung von Druck wachsartig verformbar (duktil) sein. Insoweit fallan die erfindungsgemäßen Dispersionen nicht unter den Begriff "Paste". Sie enthalten neben der Katalysatorsubstanz und dem Einbettungsmittel keine Fremdstoffe, wie Dispergierhilfsmittel, Filterhilfen oder Adsorbentien.

Bei Verwendung solcher Einbettungsmittel wird eine Katalysatormasse erhalten, die nicht feuergefährlich ist, eine hohe Hydrieraktivität besitzt und leicht in beliebige Portionen aufgeteilt werden kann. Der Katalysator kann ohne Einschränkung mehrfach hintereinander für eine Hydrierung eingesetzt werden, ohne daß ein erheblicher Aktivitätsverlust eintritt. Er ist geeignet, Trägerkatalysatoren z.B. des Typs Ni/SiO$_2$-Träger mit Vorteil zu ersetzen ; dies kann bei Hydrieranlagen, in denen der Katalysator gepumpt werden muß, infolge Fortfalls von Abrasivitätseffekten sehr günstig sein.

Die u.a. als Einbettungsmittel vorgesehenen Amine enthalten alle wenigstens eine gesättigte oder ungesättigte, gerade oder verzweigte Kohlenstoffkette von 8 bis 22 C-Atomen und sind primäre, sekundäre oder tertiäre Amine, Diamine (abgeleitet von z.B. Äthylendiamin oder Propylendiamin, wobei wenigstens an einem N-Atom eine C$_8$-C$_{22}$-Kette hängt), oder zyklische Amine (Amine mit mindestens einem N-Atom in einem heterozyklischen Ring, bei denen wenigstens eine C$_8$-C$_{22}$-Kette mit einem N-Atom oder einem C-Ringatom verbunden ist ; ein Beispiel ist Imidazolin, in dessen 2-Stellung eine C$_8$-C$_{22}$-C-Kette sitzt).

Die Amine oder Diamine können synthetisch hergestellt sein. Sie können aber auch, zumindest zum Teil aus Naturprodukten, wie tierischem Talg, Rapsöl, Kokos-, Soja- und Fischöl gewonnen werden. Auch Gemische dieser Amine sind vorzüglich geeignet.

Dagegen können neben den genannten Einbettungsmitteln noch Stoffe vorliegen, welche dem Endprodukt einer Hydrierung entsprechen.

Gegenüber den in der DE-PS 2724239 beschriebenen inertisierten Raney-Katalysatoren, welche stets noch erhebliche Mengen an freiem oder adsorbierten Wasser enthalten, besteht bei den erfindungsgemäßen Verfahrensprodukten keinerlei Gefahr, daß damit gefüllte Metallgebinde, z.B. Eisenfässer, korrodieren. Dazu kommt der Vorteil, hydrolysierbare Substrate ohne Zersetzung hydrieren zu können.

Besonders günstig hinsichtlich Fertigung und Anwendung sowie Aktivität des Katalysators hat sich eine Raney-Katalysator-Dispersion, bestehend aus 50-70, vorzugsweise 60 Gew.% Raneynickel und 50-30, vorzugsweise 40 Gew.% Paraffinwachs, Distearylamin oder Talgfettalkohol mit C$_{16}$-C$_{18}$ erwiesen.

Ein wesentlicher Gegenstand der Erfindung ist auch ein Verfahren zur Herstellung der erfindungsgemäßen Katalysator-Dispersionen, welches als bekannte Operation das Vermischen eines Raney-Katalysators in Form eines wäßrigen Schlamms mit dem Einbettungsmittel beinhaltet. Das Verfahren ist dadurch gekennzeichnet, daß man den Katalysatorschlamm in einem Vakuummischer unter Inertgas vorlegt, das schmelzbare organische Einbettungsmittel, gegebenenfalls aufgeschmolzen, unter Mischen hinzugibt, wobei anschließend, falls das Einbettungsmittel noch schmelzflüssig sein sollte, dieses unter den Erstarrungspunkt abgekühlt wird, 80 bis 90 Gew.-% des mit dem Katalysatorschlamm in den Vakuummischer eingebrachten Wassers aus dem inhomogenen Dreistoffsystem Katalysator/Wasser/Einbettungsmittel bei Temperaturen unterhalb des Schmelzpunkts des Einbettungsmittels im Vakuum und das Restwasser oberhalb des Schmelzpunkts des Einbettungsmittels, vorzugsweise unterhalb 100°C, im Vakuum unter Fortsetzen des Mischens abdestilliert, die Dispersion nach Brechen des Vakuums mit Inertgas, gegebenenfalls in oberflächenarme Formkörper, insbesondere durch Überführen der noch flüssigen Katalysatordispersion auf einem gekühlten Pastelliergerät in Pastillen, verformt und in Gebinde abfüllt.

Wesentlich ist dabei, daß die destillative Abtrennung der Hauptmenge des Wassers aus dem eingesetzten wäßrigen Raney-Katalysatorschlamm (welcher durch Dekantieren und/oder Abziehen von Wasser aus üblichem wassergeschützten Raney-Katalysator mit einem Wassergehalt zwischen 20 und 40 Gew.%. gewonnen wird) bereits aus dem inhomogenen Dreistoffsystem Katalysator/Wasser/Einbettungsmittel erfolgt und das Restwasser aus der Schmelze abgetrennt wird.

Im allgemeinen werden im Verfahren gemäß der Erfindung in der ersten Entwässerungsstufe ca. 80-90 Gew.% des mit dem Katalysatorschlamm in den Vakuummischer eingebrachten Wassers und der Rest in der zweiten Entwässerungsstufe abdestilliert. Der üblicherweise noch ausreichende, sog. minimale Entwässerungsgrad des Endprodukts ($\sim$0.99 Gew.% H$_2$O) wird z.B. bei Erreichen eines Unterdrucks von 50 mbar erreicht, wenn eine Distearylamin/Raney-Katalysator-Mischung bei 80°C in der 2. Stufe entwässert wird. Höhere Entwässerungsgrade können bei mäßig gesteigerten Temperaturen, Verwendung einer leistungsfähigen Hochvakuumanlage und entsprechender Ausdehnung des Zeitraumes der Restentwässerung erreicht werden. Es werden aber bereits bei Einsatz einer Wasserringpumpe (Endvakuum ca. 20 mbar) Entwässerungtgrade bis 0.2 Gew.% H$_2$O in kurzer Zeit ohne Schwierigkeiten erreicht.

Bei einem Ansatz aus 225 kg Katalysatorschlamm (enthaltend 150 kg Katalysator) und 100 kg Distearylamin beträgt die Dauer der 1. Entwässerungsstufe 1.5 h und die der zweiten 0.5 h.

Die Erfindung wird nachfolgend anhand einiger Ausführungsbeispiele zur Herstellung der festen, praktisch wasserfreien Raney-Katalysator-Dispersion in einem schmelzbaren organischen Einbettungsmittel weiter erläutert.

### Beispiel 1

In einem mit Stickstoff gespülten Vakuum-Planeten-Mischer wurden 100 kg Raney-Nickel, bestehend aus 60 kg Nickel und 40 kg überstehendem Wasser eingefüllt. Nach Absaugen des überstehenden Wassers mittels einer von oben in den Mischer eingeführten Sonde wurden 40 kg aufgeschmolzener Talgfettalkohol $C_{16}$-$C_{18}$ von 80°C (Hydrenol der Fa. Henkel) auf den zurückgebliebenen, d.h. 30 Gew.% Wasser enthaltenden Katalysatorschlamm gegeben.

Nickel und Fettalkohol wurde zu einer krümeligen, mit ca. 30 Gew.% Wasser durchsetzten Masse vermischt. Nach Anlegen von Vakuum an den Mischer wurde die Temperatur bis unterhalb des Schmelzpunktes das Fettalkohols (ca. 50°C) gesteigert und die Hauptmenge des enthaltenen Wassers (ca. 90 Gew.%) abdestilliert. Anschließend wurde über den Schmelzpunkt des Fettalkohols erhitzt und am Vakuum weiter gemischt. Dabei wurden die Nickelteilchen gleichmäßig in den geschmolzenen Fettalkohol eingebettet. Das restliche Wasser wurde sodann oberhalb des Schmelzpunktes des Fettalkohols abdestilliert. Nachdem 80°C bei einem Unterdruck von ca. 50 mbar erreicht waren, wurde der Mischer mit Stickstoff inertisiert und die fließfähige Masse auf einem Kühlband zu Pastillen (8-10 mm) geformt. Das praktisch wasserfreie Produkt (Wassergehalt 0,2 Gew.%) wurde in Fässer verpackt. Eine Prüfung der Hydrieraktivität an einem Talgfettalkohol mit der mittleren Kettenverteilung 5% $C_{14}$, 30% $C_{16}$ und 65% $C_{18}$ (MG 260, OH-Zahl 215) entsprach derjenigen des wassergeschützten Ausgangskatalysators. Der Hydriertest ist im Beispiel 7 beschrieben.

### Beispiel 2

Es wurde wie in Beispiel 1 vorgegangen, jedoch wurden 40 kg geschmolzenes Hartparaffin ($C_{18}$) zugegeben. Nach Abdestillieren der Wasser-Hauptmenge und Überschreiten des Paraffinschmelzpunktes (56°C) wurde wie in Beispiel 1 eine homogene Mischung erhalten. Diese wurde auf einem Kühlband zu Pastillen verarbeitet. Das Fertigprodukt enthielt ca. 0,3 Gew.% Wasser. Die Hydrieraktivität gegenüber einem Talgfettsäurenitril mit dar (im Lieferprospekt aufgeschlüsselt angegebenen) Kettenverteilung (ges. = gesättigt ; unges. = ungesättigt) :

$$
\begin{aligned}
&C_{13} \qquad\quad 3\ \% \qquad\qquad \text{ges.}\\
&C_{14} \qquad\quad 1\ \% \qquad\qquad \text{unges.}\\
&C_{15} \qquad\quad 26\ \%\ \text{ges.;}\quad 2\ \%\quad \text{unges.}\\
&C_{16} \qquad\quad 2\ \%\ \text{ges.}\\
&C_{17} \qquad\quad 17\ \%\ \text{ges.;}\quad 48\ \%\quad \text{unges.}\\
&C_{19} \qquad\quad 1\ \%\ \text{ges.,}\\
&\text{dem Molekulargewicht 257 und}\\
&\text{der Jodzahl 55}
\end{aligned}
$$

erwies sich gegenüber dem Ausgangsprodukt als unverändert.

### Beispiel 3

Es wurde wie in Beispiel 1 gearbeitet, jedoch wurden 40 kg geschmolzenes Distearylamin (sekundäres Amin, Genamin SH 200 der Hoechst AG) zugegeben. Nachdem die Hauptmenge Wasser unterhalb des Schmelzpunktes des Distearylamins (ca. 64°C) entfernt waren, wurde das restliche Wasser im Vakuum unter Mischen bei Temperaturen bis zu 80°C abdestilliert. Die erhaltene gleichmäßige Mischung wurde wie in Beispiel 1 zu Pastillen (Abmessungen 8-10 mm) weiter verarbeitet. Das Fertigprodukt enthielt 0,2 Gew.% Wasser. Die Hydrieraktivität gegenüber dem Talgfettsäurenitril von Beispiel 2 entsprach derjenigen der wäßrigen Ausgangskatalysators.

Beispiel 4

Es wurde wie in Beispiel 1 gearbeitet, jedoch wurden 40 kg geschmolzenes Glycerin-Tristearat (Edenor NHTI der Fa. Henkel) zugegeben. Dabei handelt es sich gemäß Angabe genannter Firma um Glycerin-Tristearat mit 30% Tripalmitin $C_{57}H_{110}O_6$. Das Wasser wurde entsprechend Beispiel 1 unterhalb und oberhalb des Glycerin-Tristearat-Schmelzpunktes (60°C) abdestilliert und die Mischung auf dem Kühlband zu Pastillen verarbeitet. Das Fertigprodukt enthielt nur 0,3 Gew.% Wasser. Seine Hydrieraktivität bei einer Fettsäurehärtung erwies sich gegenüber dem wassergeschützten Ausgangsprodukt als gleichwertig.

Beispiel 5

Auch hier wurde wie in Beispiel 1 vorgegangen, jedoch, wurden 40 kg geschmolzenes Talgfettamin (hydriertes Talgfett-Alkylamin $C_{12}$-$C_{20}$, Fp 50°C, der Fa. Kenobel, Handelsname "Amine 2 HBG") zugegeben. Die weitere Verarbeitung zu einer homogenen Mischung und zu Pastillen erfolgte wie in Beispiel 1 beschrieben. Das Fertigprodukt enthielt nur 0,4 Gew.% Wasser. Seine Hydrieraktivität gegenüber dem Fettsäurenitril von Beispiel 2 erwies sich gegenüber dem wassergeschützten Ausgangsprodukt als unverändert.

Beispiel 6

Es wurde wie in Beispiel 1 vorgegangen, jedoch wurden 60 kg geschmolzenes Siliconharz Mk des Schmelzintervalls 45-70°C (Hersteller Fa. Wacker Chemie) zugegeben. Das Wasser wurde entsprechend Beispiel 1 unterhalb und oberhalb des Siliconharz-Schmelzintervalls abdestilliert und die Mischung auf dem Kühlband zu Pastillen (8-10 mm) verarbeitet. Das Fertigprodukt enthielt nur 0,3 Gew.% Wasser.

Beispiel 7

In einem 1 Liter Edelstahldruckbehälter mit Ruhrer und Kreisgasführung wurden 500 g eines Talgfettalkohols des MG 260 und der OH-Zahl 215 eingefüllt. Die mittlere Kettenverteilung des Alkohols beträgt 5% $C_{14}$, 30% $C_{16}$ und 65% $C_{18}$.

Nach Spülen des Behälters mit Stickstoff wurden 10 g des nach Beispiel 1 hergestellten Katalysators, bezogen auf den Nickelinhalt, zugegeben. Der Rührbahälter wurde geschlossen und unter Durchströmen mit Stickstoff aufgeheizt. Ab 120°C wurde bis Erreichen der Reaktionstemperatur von 200°C zuerst 1.5 h ein Ammoniak/Wasserstoff-Gemisch im Vol.-Verhältnis von 1 : 1, dann 1 h ein solches von 2 : 5 eingeleitet und bei 2 bar im Kreislauf geführt. Gebildetes Ammoniakwasser wurde in einem Kühlar abgetrennt und gesammelt. Nach 2.5 h (Erreichen einer Jodzahl < 3) war die Aminolyse beendet. Nach Abkühlen auf 100°C und Spülen mit Stickstoff wurde das gebildete Amin isoliert. Die Analyse ergab eine Amin-Gesamtausbeute von 99%, darunter 89.8% sek. Amin, 5.3% tert. Amin, 3.9% prim. Amin, Nicht-Aminanteile 1,0%.

**Patentansprüche**

1. Feste, weniger als 1 Gew.% Wasser enthaltende Raney-Katalysator-Dispersion in einem organischen Einbettungsmittel, das gegebenenfalls aus einem primären, sekundären oder tertiären Amin mit $C_8$-$C_{22}$, einem Diamin oder zyklischen Amin oder einem feiten, eine oder mehrere dieier Aminverbindungen enthaltenden Amingemisch besteht, erhältlich durch Vermischen einei Raney-Katalysators in Form einei wäßrigen Schlamms mit dem Einbettungsmittel, **dadurch gekennzeichnet,** daß der Katalysatorschlamm in einem Vakuummischer unter Inertgas vorgelegt, das schmelzbare organische Einbettungsmittel, gegebenenfalls aufgeschmolzen, unter Mischen hinzugegeben, 80 bis 90 Gew.-% des mit dem Katalysatorschlamm in den Vakuummischer eingebrachten Wassers aus dem inhomogenen Dreistoffsystem Katalysator/Wasser/Einbettungsmittel bei Temperaturen unterhalb des Schmelzpunkts des Einbettungsmittel im Vakuum und das Restwasser oberhalb des Schmelzpunkts des Einbettungsmittels, vorzugsweise unterhalb 100°C, im Vakuum unter Fortsetzen des Mischens abdestilliert wird und daß die Dispersion nach Brechen des Vakuums mit Inertgas, gegebenenfalls nach Verformen in oberflächenarme Formkörper, in Gebinde abgefüllt wird, wobei das Einbettungsmittel auch ein aliphatischer Alkohol mit $C_{16}$-$C_{22}$ oder ein diese Alkohole enthaltendes festes Gemisch verschiedener Fettalkohole, ein festes Triglycerid, ein Paraffinwachs, ein natürliches oder synthetisches Wachs, ein Siliconharz oder ein organisches Polymer sein kann und wobei das Gewichtsverhältnis zwischen Katalysator-Feststoff und Einbettungsmittel 20-80 Gew.-% zu 80-20 Gew.-% beträgt.

2. Verfahren zur Herstellung der Raney-Katalysator-Dispersion gemäß Anspruch 1, durch Vermischen eines Raney-Katalysators in Form eines wäßrigen Schlamms mit dem Einbettungsmittel, **dadurch gekennzeichnet**, daß man den Katalysatorschlamm in einem Vakuummischer unter Inertgas vorlegt, das schmelzbare organische Einbettungsmittel, gegebenenfalls aufgeschmolzen, unter Mischen hinzugibt, wobei anschließend, falls das Einbettungsmittel noch schmelzflüssig sein sollte, dieses unter den Erstarrungspunkt abgekühlt wird, 80 bis 90 Gew.-%. des mit dem Katalysatorschlamm in den Vakuummischer eingebrachten Wassers aus dem inhomogenen Dreistoffsystem Katalysator/Wasser/Einbettungsmittel bei Temperaturen unterhalb des Schmelzpunkts des Einbettungsmittels im Vakuum und das Restwasser oberhalb des Schmelzpunkts des Einbettungsmittels, vorzugsweise unterhalb 100°C, im Vakuum unter Fortsetzen des Mischens abdestilliert die Dispersion nach Brechen des Vakuums mit Inertgas gegebenenfalls in oberflächenarme Formkörper, insbesondere durch Überführen der noch flüssigen Katalysstordispersion auf einem gekühlten Pastelliergerät in Pastillen, verformt und in Gebinde abfüllt.

## Claims

1. A solid Raney catalyst dispersion containing loss than 1% by weight water in an organic embedding material optionally consisting of a primary, secondary or tertiary $C_{8-22}$ amine, a diamine or cyclic amine or of a solid amine mixture consisting of one or more of these amine compounds, obtainable by mixing of a Raney catalyst in the form of an aqueous slurry with the embedding material, characterized in that the catalyst slurry is introduced into a vacuum mixer under inert gas, the fusible organic embedding material — optionally melted — is added with mixing, 80 to 90% by weight of the water introduced into the vacuum mixer with the catalyst slurry is distilled off in vacuo from the inhomogeneous three-component system catalyst/water/embedding material at temperatures below the melting point of the embedding material while the residual water is distilled off in vacuo above the melting point of the embedding material, preferably below 100°C, with continued mixing and in that, after breaking of the vacuum with inert gas, the dispersion is packed in containers, optionally after shaping into mouldings of small surface area ; the embedding material may even be an aliphatic $C_{16-22}$ alcohol or a solid mixture of various fatty alcohols containing these alcohols, a solid triglyceride, a paraffin wax, a natural or synthetic wax, a silicone resin or an organic polymer and the ratio by weight between catalyst solids and embedding material is 20-80% by weight to 80-20% by weight.

2. A process for the production of the Raney catalyst dispersions claimed in claim 1 by mixing of a Raney catalyst in the form of an aqueous slurry with the embedding material, characterized in that the catalyst slurry is introduced into a vacuum mixer under inert gas, the fusible organic embedding material — optionally melted — is added with mixing, the embedding material subsequently being cooled to below its solidification point should it still be molten, 80 to 90% by weight of the water introduced into the vacuum mixer with the catalyst slurry is distilled off in vacuo from the inhomogeneous three-component system catalyst/water/embedding material at temperatures below the melting point of the embedding material while the residual water is distilled off in vacuo above the melting point of the embedding material, preferably below 100°C, with continued mixing ; after breaking of the vacuum with inert gas, the dispersion is optionally shaped into mouldings of small surface area, more particularly by conversion of the still liquid catalyst dispersion into pellets on a cooled pelletizer, and packed in containers.

## Revendications

1. Dispersion d'un catalyseur de Raney, solide, renfermant moins de 1% d'eau, dans un agent d'enrobage organique qui, le cas échéant, se compose d'une amine primaire, secondaire ou tertiaire en $C_8$-$C_{22}$, d'une diamine ou d'une amine cyclique ou d'un mélange d'amines, solide contenant un ou plusieurs de ces composés aminés, que l'on peut obtenir par mélange d'un catalyseur de Raney sous forme d'une boue aqueuse avec l'agent d'enrobage, caractérisée en ce que l'on introduit la boue de catalyseur dans un mélangeur sous vide, sous gaz inerte, que l'on ajoute l'agent d'enrobage organique fusible, le cas échéant fondu, sous mélange, que l'on sépare par distillation 80 à 90% en poids de l'eau introduite dans le mélangeur sous vide avec la boue de catalyseur, du mélange hétérogène à trois substances catalyseur/eau/agent d'enrobage, à des températures en dessous du point de fusion de l'agent d'enrobage sous vide, et que l'eau restante est séparée au-dessus du point de fusion de l'agent d'enrobage, de préférence en dessous de 100°C, sous vide tout en poursuivant le mélange et que la dispersion est mise en flacons, après avoir cassé le vide avec un gaz inerte, le cas échéant après formage en solides de moulage, pauvres en surface, dans laquelle l'agent d'enrobage peut être également un alcool aliphatique ayant de $C_{16}$ à $C_{22}$, ou un mélange solide contenant ces alcools, de différents alcools gras, un triglycéride solide, une cire de paraffine, une cire naturelle ou synthétique, une résine de silicone, ou un polymère organique et dans laquelle le rapport pondéral entre le solide catalyseur et l'agent d'enrobage s'élève de 20 à 80% en poids à 80 à 20% en poids.

2. Procédé d'obtention de la dispersion de catalyseur de Raney selon la revendication 1, par mélange d'un catalyseur de Raney sous forme d'une boue aqueuse avec l'agent d'enrobage, caractérisé en ce que l'on introduit la boue de catalyseur dans un mélangeur sous vide sous gaz inerte, que l'on ajoute l'agent d'enrobage organique fusible, le cas échéant fondu, sous mélange, dans lequel ensuite au cas où l'agent d'enrobage serait encore liquide de fusion, on refroidit celui-ci en dessous du point de solidification, que l'on sépare par distillation 80 à 90% en poids de l'eau introduite avec la boue de catalyseur dans le mélangeur sous vide, du système hétérogène à trois substances catalyseur/eau/agent d'enrobage, à une température en dessous du point de fusion de l'agent d'enrobage sous vide et l'eau restante au-dessus du point de fusion de l'agent d'enrobage, de préférence en dessous de 100°C sous vide, tout en poursuivant le mélange, en ce qu'on transforme la dispersion après avoir cassé le vide avec un gaz inerte, le cas échéant en forme de moulage pauvre en surface, en particulier par transformation de la dispersion de catalyseur encore fluide en pastilles dans un appareil à pastiller réfrigéré et que l'on conditionne en flacons.